(19) Europäisches Patentamt

**European Patent Office**

**Office européen des brevets**

(11) Veröffentlichungsnummer: **0 122 233**
A1

(12) **EUROPÄISCHE PATENTANMELDUNG**

(21) Anmeldenummer: **84830067.9**

(22) Anmeldetag: **13.03.84**

(51) Int. Cl.³: **A 47 J 27/16,** A 47 J 39/02,
A 23 L 3/10

(30) Priorität: **30.03.83 IT 4802583**

(43) Veröffentlichungstag der Anmeldung: **17.10.84**
**Patentblatt 84/42**

(84) Benannte Vertragsstaaten: **AT BE CH DE FR GB LI LU NL SE**

(71) Anmelder: **Ronchi, Aldo, Via Murillo 3, I-20149 Milano (IT)**

(72) Erfinder: **Ronchi, Aldo, Via Murillo 3, I-20149 Milano (IT)**

(74) Vertreter: **Sneider, Massimo, Lenzi & C. Via Lucania, 13, I-00187 Roma (IT)**

(54) **Prozess zur ununterbrochenen Erhitzung für Speisen und dazugehörige Anlage.**

㉗ Ein Prozess zum ununterbrochenen Erhitzen von zubereiteten, vorgekochten Speisen durch Eingabe von Wasserdampf, Heissluft, oder Heissluft und Dampf, in isolierend gestaltete mit Ventilen ausgestattete Behälter (12, 13, 14). Diese Behälter sind bei der Eingabephase der erwähnten Dämpfe miteinander verbindbar, wobei sie kettenartig auf einer Bank angeordnet sind, welche sowohl mit einem Endverschluss (4), welcher den Dampf mit einem anschliessbaren Ventil (5) den Behältern zuführt, als auch mit einem Verbindungsmechanismus (17, 18) mit den Behältern ausgestattet ist, um das etwaige Kodenswasser im gewünschten Augenblick abfliessen zu lassen. Die Behälter sind vorbereitet um einen Warnmelder (16) der stattgefundenen Erhitzung des Inhaltes auf die gewünschte Temperatur aufzunehmen.

EP 0 122 233 A1

Anmelder :    Aldo RONCHI ,    _ 1 _   Mailand (Italien) .    0122233

"Prozess zur ununterbrochenen Erhitzung für Speisen und dazugehörige Anlage"

Beschreibung :
_____

Es ist bekannt , dass eines der grössten Probleme für die Unternehmer auf dem Ernährungsgebiet , und insbesondere der Grossrestauration , die Konservierung der gekochten Speisen ist , welche , wie nunmehr erwiesen , wenn sie auf einer sich zwischen +10 und +59° C erstreckenden Temperatur gehalten werden , eine für die Gesundheit des Konsumenten schädliche Bakterienproliferation erfahren .

Auch das italienische Gesetz erlegt in dieser Hinsicht genaue Normen auf .

Gegenstand und Endziel der vorliegenden Erfindung ist es daher diese Gefahr zu beseiten und den Unternehmern auf dem Gebiet der Kollektivrestauration eine Apparatur zur Verfügung zu stellen , welche es diesen gestattet sowohl die sanitären Richtlinien zu befolgen , als auch Speisen unter optimalen Verbrauchsbedingungen zu verteilen .

Das Problem ist besonders bei jenen zentralisierten Küchen verspürbar , welche täglich für die Lebensmittelerfordernisse von Büros , Fabriken , Schulen , Baustellen , usw. vorsorgen , wo die Speisen in wärmeisolierenden Behältern mit Einportionwannen mit den Nahrungsmitteln zugestellt worden sind . Sehr häufig gelangen die
Nahrungsmittel zum Konsum mit einer geringeren Temperatur als +60° C , denn die Kochwärme verliert sich bei
den Aufteilungs-, Verpackungs-, Stapelungs- und Transportoperationen . Ausser der Nicht-Einhaltung der Normen für die unzureichende Temperatur zur einwandfreien
Konservation kommt das Unbehagen des Konsumenten hinzu ,
keine Speise bei optimaler Temperatur zu geniessen .
Dieses Restaurationsverfahren wird auf dem Gebiet "linea
calda" (warme Linie) bezeichnet .

Eine andere Methode , welche mit dem Ausdruck "linea fredda" (kalte Linie) bezeichnet wird , sieht eine
rasche Senkung der Kochwärme bis auf +4,+5° C vor . Anschliessend , beim Annähern des Augenblickes des Verbrauches , wird die Temperatur auf +60° C gebracht ,
u.zw. mit hilfe von Öfen verschiedener Natur , z.B. Ultraschallöfen , Mikrowellenöfen , Heissluftthermokonvertern, usw. . Diese Methodologie sieht hohe Anlage-
und Aussenpersonalkosten für die örtliche Bewirtschaftung der Nahrungsmittel vor , bevor letztere den Konsumenten serviert werden .

Hinzu kommt noch , dass die Ofenerhitzung die Speise dehydratisiert und sie in ihren organoleptischen Eigenschaften verändert , typisch ist dabei der Geschmack des aufgewärmten Essens .

Die vorliegende Erfindung hat den Zweck Dampf über eigens dazu vorgesehene Düsen in denselben , für den Transport bis zur Stelle des Verbrauches der das Essen enthaltenden Behälter isolierend gestalteten Behälter einzublasen .

Der Dampf zirkuliert im Inneren des Behälters und tritt bei einer anderen Düse aus , um dem anschliessbaren Behälter mittels mit einem Ventil versehener geeigneter Leitung zugeleitet zu werden , und so fort . Vom letzten angeschlossenen Behälter tritt der Dampf bei einem Ventil aus , um entweder zerstreut oder zur eigenen Rückgewinnung gefördet zu werden , oder um für einen anderen Gebrauch bestimmt zu werden .

Das von der vorliegenden Methodologie vorgesehene Verfahren ist somit bei den eingangs beschriebenen , in der Kollektivrestauration gebräuchlichen Methoden anwendbar , und zwar :

- warme Linie , indem die Ankunft zum Verbrauch der im vorgesehenen thermischen Behälter (welcher nachstehend in jeder Hinsicht beschrieben wird) enthaltenen Speisen bis zu einer Temperatur von +70° C, 75° C ermöglicht wird , wobei die Temperatur der bereits lauwarmen Speise integriert wird ;

- kalte Linie , indem die Anfangstemperatur von +3° C bis über +65° C oder +70° C, +75° C integriert wird ;

- tiefgekühlte Linie , welche hier erstmals genannt wird , bei der die Temperatur von -24° C oder -18° C auf +70/75° C erhöhbar ist .

Was bisher nur kurzgefasst angeführt wurde , kann der nachstehenden ausführlichen , anhand der anliegenden Zeichnung abgefassten Beschreibung besser entnommen werden . In der Zeichnung selbst zeigen :

Fig. 1 eine Ansicht in Querschnitt und eine Draufsicht der erfindungsgemässen Anlage ;

Fig. 2 einen axonometrischen Schnitt des eigens erforschten Behälters für Nahrungsmittel .

Bezugnehmend auf die Zeichnung besteht die erfindungsgemässe Anlage aus :

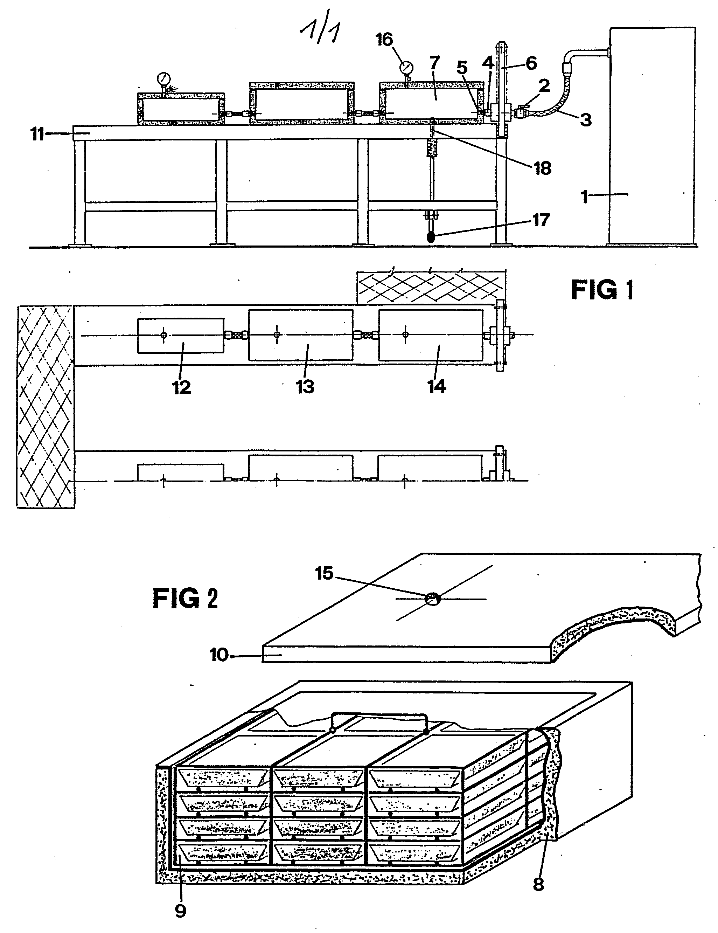

einem Dampfgenerator 1 (Fig. 1) ;

einem Hahn 2 für den Austritt des Dampfes ;

einer flexiblen Muffe 3 aus wärmebeständigem Material ;

einem Ventil 4 mit geeichter Feder , welches den Eintritt des Dampfes in das Innere des Behälters über ein anderes Ventil 5 freigibt , mit dem der Behälter ausgerüstet ist ;

einem Gestell 6 , welches das Gleiten der flexiblen Muffe von oben nach unten gestattet , derart um das Zusammentreffen der beiden Ventile 4 und 5 zu begünstigen . Das Einstecken des einen Ventils in das andere wird von einem Gleitdruck unterstützt , welchen man auf den Behälter in Richtung des Gestells 6 ausübt , das das von oben nach unten und umgekehrt verschiebbare Einsteckventil trägt . Der Anschluss , d.h. Einsteckung , ermöglicht den Zutritt des Dampfes in den Behälter 7 .

Der in Fig. 2 gezeigte Behälter , welcher in der Lage ist die Behälter oder Gefässe mit den Speisen aufzunehmen , besteht aussen aus einem isolierenden Material 8 wie Polyurethan oder Polystyrolschaum und ist innen aus einer Metallwanne z.B. aus rostfreiem Stahl gebildet .

Im Falle des Gebrauches bei "warmer Linie" (Eingabe von bereits warmen Speisen in die thermischen Behälter , welche aber wieder auf die von den sanitären Normen vorgeschriebene Mindesttemperatur oder auch auf eine höhere Temperatur zwecks besserer Bedienung des Konsumenten gebracht werden müssen) müssen die Behälter mit den bereits portionierten Speisen zwischen einer Etage und der anderen mit einem weitmaschigen Netz aus Metall oder einem anderen Material getrennt werden .

Für die "kalte Linie" ($0°$ C bis $+70°$ C) ist ein Käfig aus Metalldraht erforderlich , welcher die Zirkulation des Dampfes zwischen einem Behälter und einem anderen ermöglicht , derart um die grösstmögliche Ober-

fläche der Wärme auszusetzen . Das Rahmengestell , d.h.
der Käfig 9 sieht oberhalb einen Handgriff zum Herausziehen und Hineinsetzen in einem Block der einzelnen
Wannen vor .

Der Deckel 10 besteht wie der Behälter aus einer
Schicht aus Wärmedämmstoff , z.B. Polyurethan oder Polystyrolschaum , und aus einem Teil aus rostfreiem
Stahl , welcher mit einer wärmebeständigen Dichtung an
jener Seite versehen ist , die dazu bestimmt ist mit
dem Behälter unmittelbar in Berührung zu kommen . Der
Deckel wird an den Körper des Behälters angehakt , um
den gesamten eingegebenen Dampf zurückzuhalten und somit die Wärme nach Beendigung des Einblasens lange aufrechtzuerhalten .

Nachdem die Behälter einmal gefüllt und verschlossen sind , werden jeweils drei oder vier von diesen auf
Laufschienen 11 aufgesetzt , derart um sie mittels der
Einsteckventile , mit denen sie ausgerüstet sind , miteinander verbinden zu können . Wenn die Behälter mit
Druck untereinander anhaften , öffnen sich die feder-
und nutartig ausgebildeten Ventile und geben die Zirkulation des in den anfänglichen Behälter eingegebenen
Dampfes bis zum letzten der Behälter 12,13 und 14 frei .

Um zu vermeiden , dass sich ein Druck aufbaut ,
ist am Deckel eines jeden Behälters ein Ventil 15 vorgesehen , welches jenen Dampf austreten lässt , welcher
sich im Überschuss im Falle einstellen sollte , wenn er
aus einem beliebigen Grund aus dem Ventil des zuletzt
in Reihenfolge angeordneten Behälters nicht abströmen
würde . Das Ventil kann ein Gewichts- oder Federventil
sein .

Da der Dampf mit atmosphärischen Druck wirkt , genügt es , wenn die Ventile auf halben Atmosphärendruck
geeicht sind , um eine Druckstetigkeit in jedem Behälter zu bewirken und so eine grösstmögliche Betriebssicherheit zu gewährleisten , bei der sich in keinem Behälter
unbeabsichtigterweise ein Druck aufbauen kann .

Ein Gelenkthermostat 16 mit magnetischem flachem Boden sorgt dafür mit Licht oder anderem die optimale Temperature der Speisen anzuzeigen .

Ein von einer Feder gesteuerter Fusshebel 17 wirkt
auf eine am Boden des Behälters angeordnete Düse 18 ein ,
um das von der Dampfeingabe hervorgerufene Kondenswasser
abfliessen zu lassen und damit den Behälter selbst trocken
und keimfrei zu halten .

0122233

"Prozess zur ununterbrochenen Erhitzung für Speisen und dazugehörige Anlage"

Patentansprüche :

1.)Prozess zur ununterbrochenen Erhitzung für Speisen und dazugehörige Anlage , dadurch gekennzeichnet , dass die Gleitbewegung des mit einem Ventil ausgestatteten Speisestutzens des Dampfes den Gebrauch von Behältern unterschiedlicher Form und Kapazität gestattet .

2.)Prozess zur ununterbrochenen Erhitzung für Speisen und dazugehörige Anlage , nach Anspruch 1 , dadurch gekennzeichnet , dass für die Erhitzung der vorzugsweise in Behältern der Art Gastronom enthaltenen , portionierten oder losen Speisen Dampf verwendet wird , wobei der Dampf keine organoleptische Veränderungen der Speisen verursacht und die grösste Hygienegaratie gestattet .

3.)Prozess zur ununterbrochenen Erhitzung für Speisen und dazugehörige Anlage , nach den vorstehenden Ansprüchen , dadurch gekennzeichnet , dass die Erhitzung in Batterie mit einem oder mehreren Angriffspunkten auf Gleittischen und der Anschluss der betätigten Behälter mit Steckventilen (Feder und Nut) oder mit Schlauchverbindung möglich ist .

4.)Prozess zur ununterbrochenen Erhitzung für Speisen und dazugehörige Anlage , nach den vorstehenden Ansprüchen , bei dem ein geeichtes Sicherheitssystem auf jedem Deckel eines jeden Behälters vorgesehen ist , derart um den doppelten Zweck zu erlagen , dass , wenn ein Ventil festsitzt , die anderen funktionieren , und dass in jedem Fall der Druck für jeden Behälter aufrechterhalten bleibt .

5.)Prozess zur ununterbrochenen Erhitzung für Speisen und dazugehörige Anlage , dadurch gekennzeichnet , dass als Isolierstoff Polystyrolschaum vorgesehen ist , aber gleichfalls zwei- oder mehrschichtige Polyurethanschäume mit unterschiedlicher Dichte oder beliebige andere isolierende oder wärmedämmende Materialien verwendet werden können .

6.)Prozess zur ununterbrochenen Erhitzung für Speisen und dazugehörige Anlage , dadurch gekennzeichnet , dass die innere Wanne vorzugsweise aus Metall hergestellt ist , aber auch aus jedem beliebigen anderen wärmebeständigen Material gefertigt sein kann .

7.)Prozess zur ununterbrochenen Erhitzung für Speisen und dazugehörige Anlage , dadurch gekennzeichnet , dass zwecks Dampfaussetzung der gesamten Oberfläche der portionierten Speisen ein innerer Käfig vorgesehen ist , welcher die Unterbringung der Wannen ermöglicht .

8.)Prozess zur ununterbrochenen Erhitzung für Speisen und dazugehörige Anlage , dadurch gekennzeichnet ,

— 8 —

dass der Generator sowohl ein Dampfgenerator wie ein Heissluftgenerator als auch ein Dampf- und Heissluftgenerator sein kann .

9.)Prozess zur ununterbrochenen Erhitzung für Speisen und dazugehörige Anlage , dadurch gekennzeichnet , dass ein von einem Fusshebel betätigter Ablass des Kondenswasser vorgesehen ist , womit die Sterilisierung des Behälters ermöglicht und derselbe unter Einhaltung der sanitären Bestimmungen somit selbstreinigend gestaltet wird .

10.)Prozess zur ununterbrochenen Erhitzung für Speisen und dazugehörige Anlage , dadurch gekennzeichnet , dass ein thermostatischer Adhäsions- oder Eintauchregler mit magnetischer Oberfläche vorgesehen ist .

11.)Prozess zur ununterbrochenen Erhitzung für Speisen und dazugehörige Anlage , dadurch gekennzeichnet , dass es möglich ist auch mit tiefgekühlten Speisen oder allenfalls mit Speisen mit einer geringeren Temperatur als -18° C zu arbeiten .

12.)Prozess zur ununterbrochenen Erhitzung für Speisen und dazugehörige Anlage , dadurch gekennzeichnet , dass die Anwendung eines Wassereinigers vorgesehen ist , welcher in der Lage ist Kalkstein oder andere Fremdstoffe vor der Sendung zum Dampfgenerator abzuhalten , damit der Bildung von Kalkstein im Inneren des Kessels oder in den Versorgungsleitungen entgegengewirkt wird , wobei ein sobeschaffener Reiniger in einer bevorzugten Form mit reintegrierbaren Harzen auf der Grundlage von Natriumchlorid oder anderen chemischen Agenzien oder mit Filtern versehen ist , welche den Kalkstein abhalten .

13.)Prozess zur ununterbrochenen Erhitzung für Speisen und dazugehörige Anlage , dadurch gekennzeichnet , dass zwecks Erhöhung der Anzahl der ununterbrochenen Versorgung eine oder mehrere Laufschienen der Behälter mit mehreren Versorgungsöffnungen des Dampfes vorgesehen sind .

14.)Prozess zur ununterbrochenen Erhitzung für Speisen und dazugehörige Anlage , dadurch gekennzeichnet , dass die Eintrittsdüse des Dampfes im Inneren des Behälters schlagenartig verlängert werden kann .

0122233

1/1

FIG 1

FIG 2

0122233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 342 930 (WEBER & CO.)  * Insgesamt * | 1-3,8, 13 | A 47 J 27/16<br>A 47 J 39/02<br>A 23 L 3/10 |
| Y | EP-A-0 055 683 (FRITSCH S.A.)  * Insgesamt * | 1 | |
| Y | CH-A- 219 091 (BRENNER)  * Insgesamt * | 1,8 | |
| Y | FR-A-2 442 035 (BEIZERMANN)  * Figuren 2-5 * | 1 | |
| A | FR-A- 434 055 (BELL)  * Insgesamt * | 1,2 | |
| A | GB-A- 8 214 (SANDERSON)(A.D.1910)  * Figur 1 * | 1,2,3 | RECHERCHIERTE SACHGEBIETE (Int. Cl. ³) |
| A | GB-A-2 017 293 (UOP INC.)  * Figur 5 * | 1 | A 47 J<br>A 23 L<br>F 16 L |
| A | GB-A- 106 022 (WADE)  * Figur 1 * | 1-3,5, 6 | |
| A | DE-A-1 803 234 (AUER GmbH)  * Figur * | 1 | |

--- -/-

Der vorliegende Recherchenbericht wurde für alle Patentansprüche erstellt.

| Recherchenort<br>DEN HAAG | Abschlußdatum der Recherche<br>29-06-1984 | Prüfer<br>SCHARTZ J. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
     nach dem Anmeldedatum veröffentlicht worden ist
D : in der Anmeldung angeführtes Dokument
L : aus andern Gründen angeführtes Dokument

& : Mitglied der gleichen Patentfamilie, überein-
     stimmendes Dokument

Europäisches
Patentamt

**EUROPÄISCHER RECHERCHENBERICHT**

| | EINSCHLÄGIGE DOKUMENTE | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 429 803 (BEMISS) | | |
| | ----- . | | |
| | | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 29-06-1984 | Prüfer SCHARTZ J. |
|---|---|---|